# FASCICULE DE BREVET EUROPEEN

(11) **EP 1 343 258 B1**
(45) Date de publication et mention de la délivrance du brevet: **14.11.2012**
(21) Numéro de dépôt: 03290353.6
(22) Date de dépôt: 14.02.2003
(51) Int. Cl.: H04B 7/185

(54) **Système de commutation pour satellite**
Satellitenschaltungsystem
Satellite switching system

(30) Priorité: 05.03.2002 FR 0202770
(43) Date de publication de la demande: 10.09.2003
(73) Titulaire: Thales, 92200 Neuilly-sur-Seine (FR)
(72) Inventeur: Haardt, Céline, 31620 Bouloc (FR)
(74) Mandataire: Esselin, Sophie

(56) Documents cités:
- EP-A- 1 037 493
- EP-A2- 1 158 701
- WO-A-01/72073
- US-A- 6 108 319

## Description

La présente invention concerne un système de commutation d'informations pour un système de télécommunication par satellite, le système comportant une pluralité de terminaux utilisateurs émettant les informations à destination d'une pluralité de zones de couverture. Les informations peuvent être transmises par paquets et commutées par le système de commutation embarqué à bord d'un satellite. Ce satellite peut être géostationnaire ou non. Ces paquets peuvent être des cellules à mode de transfert asynchrone (ATM, Asynchronous Transfer Mode), mais ce dispositif peut être adapté pour tout type de paquet à longueur fixe ou variable.

L'invention se rapporte également à un dispositif de transmission, un procédé de transmission et un procédé de commutation.

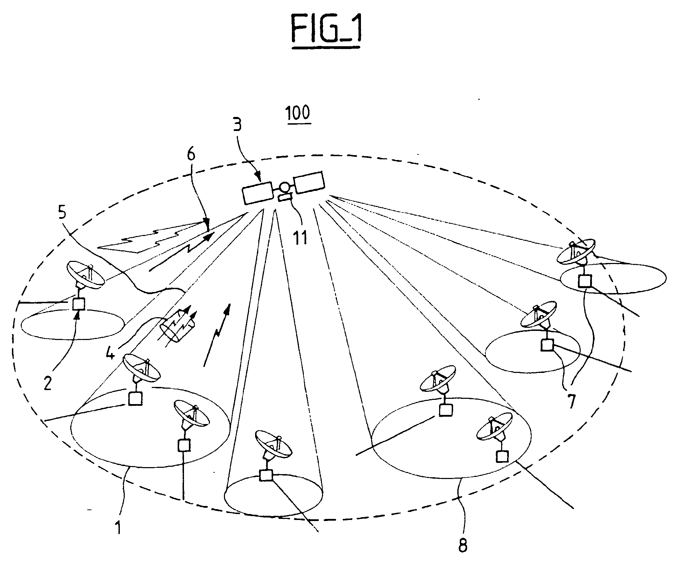

Comme montré en figure 1, un tel système de télécommunication 100 comporte une pluralité de terminaux utilisateurs 2, 7 qui sont des stations terrestres communicant entre elles via un satellite 3 avec un commutateur embarqué 11 à son bord. Le satellite 3 a pour vocation de constituer des liaisons très longues 6, là où l'investissement en câbles s'avérerait peu réaliste financièrement ou techniquement. Le commutateur embarqué 11 reçoit alors sur ses ports d'entrée des flux montants de données ou informations, c'est à dire un ensemble de données qui montent des différentes stations terrestres 2 vers le satellite 3 et distribue, à partir de ses ports de sortie, des flux descendants de données, c'est à dire un ensemble de données qui descendent du satellite 3 vers d'autres stations terrestres 7. Les terminaux 2 qui émettent à destination d'un même port d'entrée du commutateur 11 sont regroupés en une même zone géographique de couverture 1 dite aussi spot ou faisceau. De la même façon, les terminaux 7 qui reçoivent des données d'un même port de sortie du commutateur 11 sont regroupés en une zone de couverture 8. Les zones de couvertures ne sont pas forcément disjointes : il est possible en effet qu'un terminal 7 soit couvert par exemple en même temps par plusieurs zones de couvertures. En particulier, la zone de couverture peut transporter un flux d'information dont la destination finale est commune à une pluralité de terminaux. Le commutateur 11 aiguillera avantageusement le flux d'informations vers le port de sortie relié à la zone de couverture commune au lieu de dupliquer ledit flux d'informations vers les différentes zones de couvertures, économisant ainsi les ressources descendantes. Ceci peut par exemple être utilisé pour les flux d'information de type multicast, ou des informations de contrôle à caractère collectif.

Les différents terminaux utilisateurs 2 sont très souvent en concurrence pour utiliser les ressources qui constituent la bande passante des liaisons montantes et descendantes du satellite 3.

De manière connue, de nombreux dispositifs, tel que celui décrit notamment dans le document EP 1 158 701, offrent une solution à la gestion dynamique des ressources montantes et descendantes d'un système satellitaire autorisant via le satellite une connectivité dynamique entre des zones de couverture.

Une solution pour la gestion des ressources montantes consiste à utiliser un contrôleur de type DAMA (Demand Assigment Multiple Access) basé sur un protocole d'allocation dynamique des ressources qui alloue à des terminaux utilisateurs des fréquences et des intervalles temporels lorsque lesdits terminaux expriment le besoin d'émettre des données sous forme de paquets sur des liaisons montantes d'un terminal vers un satellite par le biais de requêtes envoyées au contrôleur DAMA. Un commutateur embarqué sur le satellite distribue alors les paquets de données qui arrivent sur une pluralité de liens montants vers une pluralité de liens descendants.

En ce qui concerne la gestion des ressources descendantes, on distingue deux catégories de système satellitaire autorisant via le satellite une connectivité dynamique entre des zones de couverture. Une première solution consiste à rendre entièrement compatible pour une période donnée les motifs d'accès aux liens montants avec les motifs d'accès aux liens descendants.

Durant cette période, le commutateur réalise sur chacune de ses sorties une commutation déterministe et a priori des flux de données. Il n'y a pas de situation de conflits pour l'accès aux ressources descendantes puisque le contrôleur a défini les motifs dans ce but. Le calcul de la compatibilité des motifs d'accès aux liens montants et descendants résulte de la synthèse de toutes les requêtes des terminaux utilisateurs avec les ressources disponibles. Ce calcul est effectué par un contrôleur embarqué ou non, pour une durée définie durant laquelle les motifs sont figés. Toute modification des caractéristiques du flux de données montants issus d'un terminal utilisateur (par exemple le débit, la destination) génère une nouvelle requête dudit terminal vers le contrôleur de commutation. Le contrôleur propose alors de nouveaux motifs d'accès aux liens montants et descendants, compatibles avec la nouvelle configuration. Il en résulte une grande interdépendance entre les différents terminaux utilisateurs. Une des conséquences est l'agilité ralentie avec laquelle le système satellitaire peut répondre à une modification des caractéristiques du flux de données. Cette solution est dite à commutation 'déterministe': la position du paquet de données dans un motif de trame montante détermine sa destination, il n'est donc pas nécessaire d'effectuer à bord l'analyse d'adresse. Ainsi, la complexité embarquée de tels systèmes satellitaires est réduite, l'élément de commutation peut être un commutateur circuit, éventuellement au sol.

Pour répondre aux problèmes d'interdépendance des terminaux et d'agilité de la commutation, justifiés par des caractéristiques de trafic de plus en plus volatiles (arrivée non prédictible de données en salves, trains de données courts avec diversification des destinataires), une seconde solution consiste à découpler les motifs d'accès aux liens montants des motifs d'accès aux liens descendants. Les données sont regroupées en paquets, ces paquets sont munis d'une entête contenant une adresse corrélée avec un terminal utilisateur cible. Grâce à cet en-tête, les paquets sont auto-aiguillés dans le commutateur du satellite. Un contrôleur assure la gestion des accès aux liens montants, tandis que le commutateur , après l'analyse de l'adresse aiguille à bord les données et réalise sur chacune de ses sorties un multiplexage statistique,.. Cependant, la gestion statistique de l'accès au lien descendant conduit au problème suivant: lorsque beaucoup de paquets ont pour destination la même sortie au même moment (c'est à dire doivent être supportés par un même lien descendant du satellite vers une, ou plusieurs, station utilisatrice), il en résulte un conflit. Ce conflit est résolu au moyen d'une mémoire tampon dont l'utilisation est associée à des algorithmes dit d'ordonnancement (ou de "scheduling" en anglais). Cette mémoire tampon ayant une capacité finie, si cette capacité est dépassée, on observe alors un phénomène dit de congestion. Une première solution à ce problème est d'augmenter la taille de la mémoire tampon pénalisant le bilan de consommation et de poids embarqués. Une seconde solution consiste à inclure un dispositif de contrôle de l'accès aux liens descendants. Ces mécanismes de contrôle ont pour objectif de limiter les caractéristiques de débits des terminaux utilisateurs dont les flux sont en concurrence sur un lien descendant donné, de façon préventive ou réactive. L'utilisation de cette solution se distingue de la commutation dite déterministe présentée ci-dessus dans le sens où le motif d'accès au lien descendant n'est pas strictement défini, l'agencement des paquets reste statistique, mais la probabilité de congestion est réduite par l'action desdits mécanismes.

Du point de vue de la complexité embarquée, l'introduction de l'étape d'analyse de l'adresse de destination et de mémoire tampon ont une conséquence déterminante sur l'implémentation à bord. En particulier, le recours au traitement régénératif est indispensable. Ce traitement consiste à démoduler, décoder (correction des erreurs de transmission), analyser des données puis coder et moduler ces dernières grâce à la technologie numérique. Mais ces technologies sont relativement récentes et souvent considérées comme risquées. De plus, la capacité de traitement des équipements numériques conduit à une multiplication du nombre de ces équipements au dépend du poids et de la consommation embarqués.

Mais les systèmes présentés ci-dessus doivent faire face aux nouvelles exigences liées à l'évolution de l'Internet. L'augmentation du nombre de systèmes autonomes, leur répartition géographique et la nature des applications futures (fort débit, plusieurs niveaux de qualité/priorité, mode non connecté) induisent les contraintes suivantes :
- un besoin d'inter-opérabilité entre réseaux (réduire les mécanismes d'adaptation),
- une forte capacité de transmission,
- une gestion hiérarchique des flux, en mode non connecté,
- une gestion des adresses (et des routes) de plus en plus complexe.

Les solutions dites à commutation déterministes offrent de fortes capacité de transmission avec une relative interopérabilité car les liens de transmission sont transparents (indépendance de la forme d'onde). Mais La gestion des flux est peu flexible . Les solutions dites à commutation statistique offrent une meilleurs flexibilité du point de vue de la gestion des flux et des adresses mais leur capacité de traitement est réduite et la dépendance à la forme d'onde pénalise l'interopérabilité.

La présente invention vise à apporter une solution dans ce sens.

Pour répondre à ces exigences, la charge utile du satellite doit être capable de :
- commuter des données à fort débit (centaine de mégabits/s) et issues de faisceaux différents (plusieurs dizaines),
- établir, gérer dynamiquement et hiérarchiquement les routes pour les paquets en transit sans notion de connexion (à défaut, gérer les adresses pour les commutateurs),
- d'offrir la possibilité de gérer les protocoles de la couche réseaux (i.e INTERNET) pour assurer une bonne intégration dans les réseaux terrestres, et une relative autonomie (intégration "sans couture").

A cet effet, l'invention a pour objet un système de commutation d'informations pour un satellite dans un système de transmission d'informations par satellite apte à relayer lesdites informations d'une première zone émettrice terrestre vers une seconde zone réceptrice terrestre via ledit satellite, lesdites informations se composant d'informations utiles et respectivement requêtes d'aiguillage, dites informations de contrôle, associées destinées à informer sur l'aiguillage des informations utiles, ledit système comportant :
- des moyens d'analyse d'informations à partir d'un signal portant les informations de contrôle, lesdits moyens d'analyse comprenant des moyens d'extraction des informations de contrôle, lesdits moyens d'extraction comprenant des moyens de démodulation et de décodage des informations de contrôle,
- des moyens de commutation desdites informations utiles en fonction du résultat de l'analyse des requêtes d'aiguillage associées vers au moins un port parmi plusieurs ports d'émission pour émettre vers la zone réceptrice, caractérisé en ce que les moyens d'analyse d'informations reçoivent uniquement les informations de contrôle de manière à n'opérer une opération de démodulation et de décodage que sur les informations de contrôle, les informations utiles ne subissant aucune opération de démodulation ou de décodage.

Ainsi, l'invention ajuste la capacité du traitement préalable à l'analyse (démodulation, décodage) à la seule catégorie d'information devant l'être, à savoir les requêtes d'aiguillage (champs contenant les adresses des paquets, paquets nécessaires à la signalisation, par exemple).

Grâce à l'invention, la très grande majorité des informations commutées (informations utiles) transitent de façon "passive", ne méritant pas un traitement régénératif. De par un mécanisme de pointage décrit dans la présente demande, l'information d'en-tête de paquet reste corrélée avec les données utiles.

Selon un mode de réalisation, lesdits moyens d'analyse comprennent des moyens de commande destinés à configurer les moyens de commutation en fonction des informations d'aiguillage extraites.

Selon un mode de réalisation, le signal portant lesdites informations étant un signal multiplexé en fréquence du type AMRF, des premiers canaux de fréquence étant alloués aux informations utiles alors que d'autres seconds canaux de fréquence sont alloués aux informations de contrôle, les moyens d'extraction comportent des moyens de démultiplexage fréquentiel suivis de moyens de filtrage aptes à fournir le contenu informationnel des seconds canaux de fréquence aux moyens de commande.

Selon un mode de réalisation, le signal portant lesdites informations étant un signal multiplexé dans le temps du type AMRT, des premiers groupes de fenêtres temporelles sont réservées pour les informations utiles alors que d'autres seconds groupes de fenêtres temporelles sont dédiées pour les informations de contrôle, les moyens d'extraction comportent des moyens de démultiplexage temporel aptes à fournir le contenu informationnel des seconds groupes aux moyens de commande.

Selon un mode de réalisation, le système selon l'invention comprend des moyens de génération et de transmission d'une horloge de référence, ayant pour effet d'asservir la cadence d'émission des paquets d'informations de contrôle à bord du satellite et des paquets d'informations utiles et de contrôle au sol.

Selon un mode de réalisation, le système selon l'invention comprend des moyens d'estimation pour estimer :
- la qualité de la synchronisation, nommée centrage des paquets d'informations de contrôle, l'information de centrage pouvant être ensuite transmise à une station terrestre pour centrer les paquets d'informations utiles et de contrôle à émettre par cette station,
- et/ou les caractéristiques de démodulation et de décodage des informations de contrôle à bord du satellite,
- et/ou les taux de charge des liens descendants,
- et/ou l'état des équipements à bord du satellite.

Selon un mode de réalisation, le système selon l'invention comprend des moyens de retard de tout paquet de données utile en transit dans la section de commutation du satellite, commandables et activables par les moyens d'analyse.

L'invention a également pour objet un dispositif de transmission d'informations pour une station terrestre d'un système de transmission d'informations par satellite apte à relayer lesdites informations de ladite station terrestre émettrice vers au moins une station terrestre réceptrice via ledit satellite, lesdites informations se composant informations utiles et respectivement de requêtes d'aiguillage, dites informations de contrôle, associées destinées à informer sur les informations utiles,
caractérisé en ce que ledit dispositif comporte des moyens d'adaptation pour le transport desdites informations à destination du satellite, les informations de contrôle étant adaptées de manière à pouvoir être démodulées et décodées séparément des paquets de données utiles à bord du satellite.

Selon un mode de réalisation, le dispositif de transmission selon l'invention comporte des moyens de génération de salves d'informations utiles, des moyens de génération de requêtes d'aiguillage, dites informations de contrôle, pointant chacune sur des informations utiles associées, et des moyens de multiplexage en fréquence et/ou en temps desdites informations de manière à allouer des premiers canaux aux informations utiles et des seconds canaux aux informations de contrôle.

Selon un mode de réalisation, les premiers, respectivement les seconds canaux de fréquence, sont assemblés au sein d'un même premier groupe, respectivement un même second groupe.

L'invention a également pour objet un procédé de transmission d'informations dans un système de transmission d informations par satellite apte à relayer lesdites informations d'une première zone émettrice terrestre vers une seconde zone réceptrice terrestre via ledit satellite, lesdites informations se composant d'informations utiles et respectivement de requêtes d'aiguillage, dites informations de contrôle, associées destinées à informer sur l'aiguillage des informations utiles à procéder dans le satellite, ledit procédé comportant :
- une étape de transmission des informations utiles sur des premiers canaux,
- une étape de transmission des informations de contrôle sur des seconds canaux, de sorte que seules lesdites informations de contrôle puissent être démodulées et décodées à bord du satellite.

Selon un mode de réalisation, les informations de contrôle sont émises en avance temporelle par rapport aux informations utiles auxquelles elles sont respectivement associées, la valeur de l'avance temporelle étant minorée par la durée maximale du temps d'analyse et de calcul de la configuration d'aiguillage résultants des toutes les requêtes d'aiguillage à bord du satellite.

Selon un mode de réalisation, les informations utiles et de contrôle sont émises simultanément.

Selon un mode de réalisation, les informations utiles étant émises par paquets, les paquets d'informations utiles sont séparés par des temps de silence, dits temps de garde, caractéristiques de la capacité du satellite de passer d'une configuration d'aiguillage à une autre.

Selon un mode de réalisation, les informations issues ou allant vers l'extérieur du système satellitaire subissent une conversion de leur format de transport afin d'assurer la compatibilité avec le format de transport des données propre au système satellitaire.

Selon un mode de réalisation, les requêtes d'aiguillage générées assurent la propagation de la notion de qualité de service à travers le système satellitaire, lorsque ladite notion de qualité de service existe hors du système satellitaire.

Selon un mode de réalisation, les requêtes d'aiguillage générées assurent l'aiguillage correct des informations utiles pour que, du point de vue extérieur au système satellitaire, les informations utiles aient été effectivement aiguillées vers les destinations décrites par l'information d'adresse comprise dans la requête d'aiguillage et associée aux données utiles avant de rentrer dans le système satellitaire, mettant ainsi en oeuvre un correspondance entre les ports de sortie du satellite et l'information d'adresse associée aux informations utiles avant de rentrer dans le système satellitaire.

Selon un mode de réalisation, les cadences d'émission des informations utiles et de contrôles soient asservies sur la cadence de l'horloge de référence localisée à bord du satellite, cette horloge de référence étant véhiculée dans un canal de contrôle du lien descendant.

Selon un mode de réalisation, le procédé de transmission selon 11nvention maîtrise les caractéristiques du flux d'informations utiles en termes de débit utile par une indication de gestion des ressources des liens montants et descendants véhiculée sur un canal de contrôle descendant.

Selon un mode de réalisation, le procédé de transmission selon l'invention maîtrise les caractéristiques les caractéristiques d'émission du signal modulé en termes de rythme de bit, de phase, de puissance par une indication de démodulation et de décodage véhiculée sur un canal de contrôle descendant.

Selon un mode de réalisation, le procédé de transmission selon invention maîtrise le centrage des paquets d'informations utiles par la séparation de chacun des paquets déformations utiles d'une période de garde commun à tout le système satellitaire, ces périodes de garde se présentant au satellite au même instant, afin d'opérer le changement de configuration de commutation sans interruption de service, cette synchronisation utilisant les Informations de centrage issues d'un canal de contrôle du lien descendant.

L'invention a également pour objet un procédé de commutation d'informations pour un satellite dans un système de transmission d'informations par satellite apte à relayer lesdites informations d'une première zone émettrice terrestre vers une seconde zone réceptrice terrestre via ledit satellite, lesdites informations se composant d informations utiles et respectivement de requêtes d'aiguillage, dites informations de contrôle, associées destinées à informer sur l'aiguillage à procéder sur les informations utiles, ledit procédé comportant :
- une étape d'analyse d'informations,
- une étape de commutation desdites informations utiles en fonction des requêtes d'aiguillages associées et analysées vers différents ports d'émission vers la zone réceptrice,
caractérisé en ce que l'étape d'analyse consiste à n'opérer uniquement une opération de démodulation et de décodage que sur les informations de contrôle, les informations utiles ne subissant aucune opération de démodulation ou de décodage.

Selon un mode de réalisation, la résolution des situations de conflits pouvant survenir sur un même port de sortie utilise une ré-allocation temporelle, une ré-allocation fréquentielle ou une ré-allocation de port.

Selon un mode de réalisation, dans le cas d'une réallocation, la requête d'aiguillage associée au paquet d informations utiles redirigées contient une recommandation de priorité haute.

L'invention sera mieux comprise et d'autres caractéristiques apparaîtront à l'aide de la description ci-dessous et des figures l'accompagnant :
- la figure 1, déjà décrite, représente un système de transmission d'informations par satellite entre deux zones de couverture,
- la figure 2 représente un premier mode de réalisation selon l'invention, sous forme de blocs fonctionnels, d'un noeud de type "edge" au soi, illustrant également le spectre des signaux reçus et émis par ce noeud,
- la figure 3 représente un mode de réalisation d'une station réceptrice,
- la figure 4 représente un mode de réalisation d'un système de commutation selon l'invention,
- la figure 5 représente le système de commutation de la figure 4 de façon plus détaillée pour certains de ses éléments.

Dans la présente demande, des éléments remplissant des fonctions identiques ou similaires porteront les mêmes références sur les différentes figures.

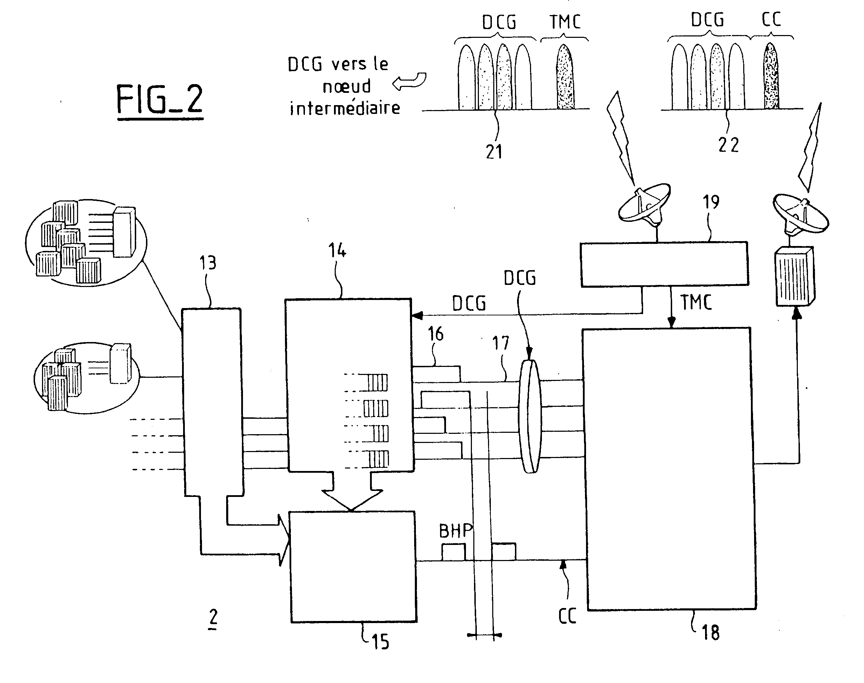

La figure 2 est un premier mode de réalisation sous forme de blocs fonctionnels d'un noeud de type "edge" au sol.

On rappelle qu'un tel type de noeud "edge" concerne un point d'accès du réseau collectant et/ou diffusant des informations d'un et/ou vers un noeud d'accès abonné et respectivement diffusant et/ou collectant des informations vers et/ou d'un ou plusieurs noeuds centraux ou "core" centralisant les informations. Dans le cas de la figure 1, par exemple, les terminaux 2 et 7 sont des noeuds "edge" et le satellite 3 est un noeud core, les accès abonnés dans la prolongation des traits continus reliés aux terminaux 2,7 n'étant pas représentés. Dans la suite, au vu de leur position dans le système, les noeuds edge seront appelés noeuds intermédiaires. Il sera vu ci-dessous qu'une relation de maître-esclave existe entre le satellite et les stations, le satellite fournissant entre autres l'horloge de synchronisation paquets aux stations 2, 7.

Comme mentionné ci-dessus, chaque port représente l'ensemble des flux d'informations transmis par un noeud "edge", ici un terminal 2 qu'on appellera dans la suite une station terrestre.

Selon l'invention, chaque port comprend un ensemble de porteuses, assemblées sous la forme :
- d'un Groupe de Canaux de Données (DCG), constitué de Canaux de Données,
- d'un Groupe de Canaux de Contrôle (CCG), constitué de Canaux de Contrôle.

L'émulation de ces ports se fait par des moyens adaptés au sein de stations terrestres 2 (point d'accès "edge") dont le rôle est de traiter les informations reçues en vue de mettre en forme ce trafic entrant. A cet effet, les opérations de traitement comprennent :
- la réception de paquets IP par un adaptateur 13 réseau,
- l'assemblage en salves puis la découpe, en paquets, tel que décrit dans la suite, de données utiles (les salves étant couramment appelés "bursts" de données) ayant des caractères ou attributs communs (même port de sortie, même QoS pour "Quality of Service" en anglais...), cette opération se faisant au sein d'un générateur 14 de salves 16,
- la génération et la transmission de requêtes d'aiguillage (contenant entre autres, la localisation dans le temps et dans l'espace de l'arrivée à bord de la salve, la longueur, l'adresse de destination de la salve de données utiles associée, des informations de priorité...). La requête d'aiguillage est émise en avance de phase de la salve de données associée, sur un canal du Groupe de Canaux de Contrôle, cette opération se réalisant au sein d'un générateur 15 de paquets de contrôle,
- la transmission éventuelle des informations de contrôle spécifiques (signalisation, protocole de maintenance par exemple) sur un canal du Groupe de Canaux de Contrôle DCG,
- après une durée déterminée, les salves de données utiles sont émises sur un canal 17 disponible parmi ceux du Groupe de Canaux de Données.

L'entête d'une salve de données est d'abord transmise sur le canal CC ("Control Channel" en anglais), suivie, après la durée prédéterminée, de la salve de données qui lui est associée sur un canal parallèle DC ("Data Channel" en anglais). Pour permettre une transmission correcte de la salve de données, l'entête de données doit contenir toutes les informations nécessaires à l'aiguillage par le contrôleur à bord du satellite.

Chaque entête de paquet est transmise comme un paquet de longueur fixée et nommé paquet d'entête de salve ou BHP ("Burst Header Paquet" en anglais). Il est requis que le BHP est transmis avant la salve correspondante avec un offset de longueur τ prédéterminé. Cet intervalle de temps permet la résolution de la requête d'aiguillage au sein du contrôleur. Les paramètres qui influencent l'offset seront précisés dans la suite.

Les canaux de contrôle et de données sont reliés à un adaptateur 18 satellite qui réalise principalement les fonctions de synchronisation paquets dit de centrage paquets, modulation, codage et multiplexage en fréquence.

Pour permettre un ordonnancement simplifié à bord du satellite, les salves de données sont transmises sur un chemin synchronisé par intervalles ("slot-synchronized path" en anglais). Les salves sont découpées en paquets de taille fixe ("slot" en anglais), et sont séparés par des intervalles de temps dits de garde. L'information de synchronisation, ou de centrage paquets dans l'intervalle de temps associé, est contenu dans un canal appelé dans la suite TMC (pour "TeleMetric Channel" en anglais) , transmise par le satellite, comme décrit ci-dessous, et reçue au niveau de la station 2 par un récepteur 19.

Cette information de centrage permet au système de transmission satellitaire d'être entièrement synchrone, le début des paquets de données utiles sur les liens montants se présentant tous au même instant. Une période de silence entre les paquets de données utiles permettent au satellite de passer d'un plan de commutation à un autre. Cette période de silence appelé temps de garde est respectée par toutes les stations émettrices vers le satellite. Tous les liens montants présentent cette période de silence au même instant.

De son côté, le satellite est pourvu d'un moyen de passage d'une configuration de commutation à une autre du commutateur pour une durée compatible avec la période de garde existant entre chaque paquet de donnée utile.

Pour des raisons d'implémentation et de performance de commutation, la taille des paquets de données utiles est fixe, commune à toutes les stations. Cependant, on peut imaginer que la taille des paquets de données utiles est variable, et que, pour chaque paquet de données utiles, la requête d'aiguillage informe le contrôleur de commutation de la durée de transit du paquet de données utiles associé à bord du satellite.

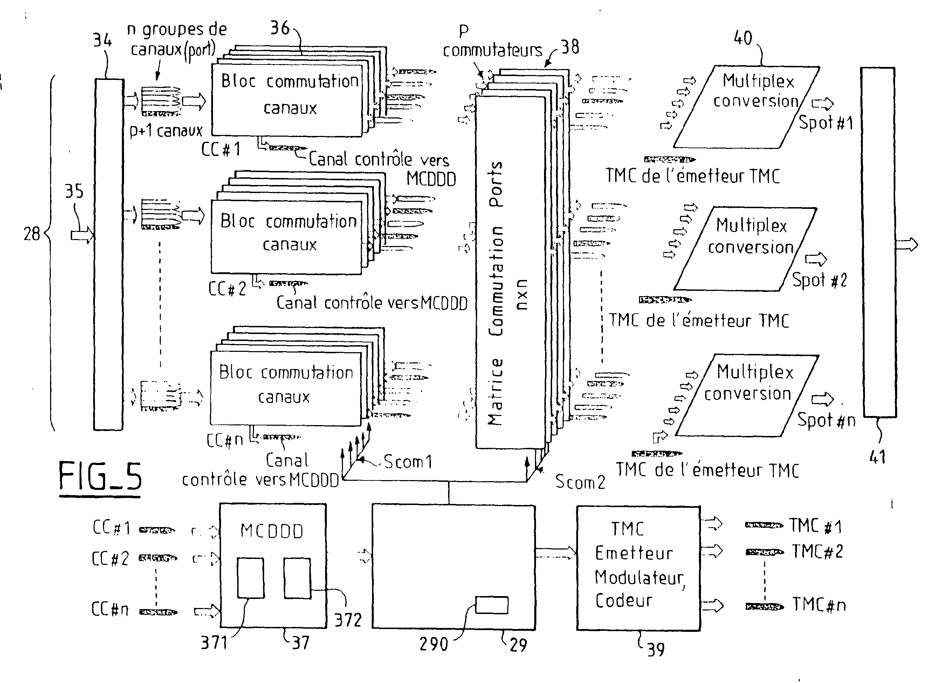

Le canal de TMC peut également véhiculer plusieurs autres informations utiles pour le fonctionnement efficace du système : ainsi, ce canal TMC peut porter un indicateur d'estimation des caractéristiques de la démodulation et du décodage des données de contrôle à bord du satellite, un indicateur d'estimation des taux de charge des liens descendants par l'organe de contrôle de d'aiguillage, ou encore un indicateur d'estimation décrivant l'état d'organes embarqués à bord du satellite. Ces indicateurs sont générés, suite à une estimation, par un estimateur 290 de la figure 5 décrite dans la suite.

La partie supérieure de la figure 2 illustre respectivement le spectre 21 du signal reçu par la station 2, comportant le groupe de Canaux de Données DCG et le canal TMC, et le spectre 22 du signal émis correspondant au signal multiplex du groupe de Canaux de Données DCG avec le canal CC.

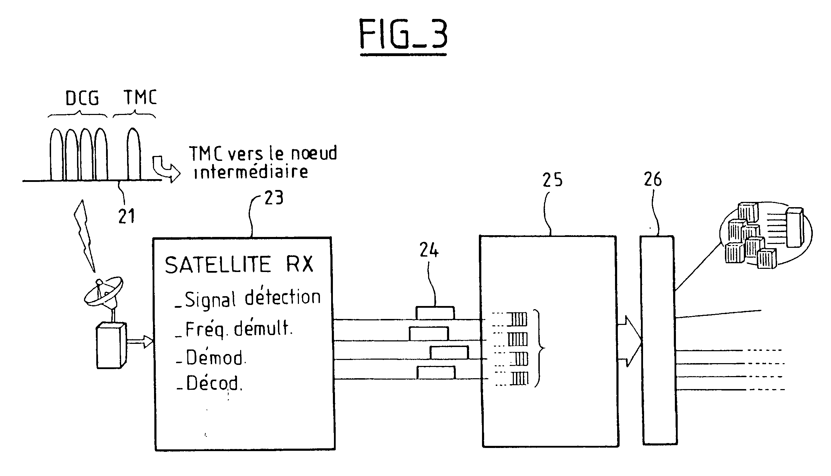

La figure 3 représente un mode de réalisation d'une station réceptrice 20. Le signal émis par le satellite est reçu par la station réceptrice, qui réalise dans un bloc récepteur satellite 23, les opérations de détection du signal grâce notamment au signal TMC, de démultiplexage fréquentiel, de démodulation et de décodage. Ces opérations, connues en soi, ne seront pas détaillées dans la présente demande. Suite à ces opérations, le paquets sont reconstitués en salves 24, qui sont transmises à un générateur 25 de paquets réseau (du type IP). Les différentes salves 24 permettent la restitution de paquets IP, ceci grâce à des moyens connus en soi. Ces moyens peuvent être par exemple un indicateur contenu dans chaque slave identifiant le ou les paquets IP de destination contenu dans la salve, ou un contrôleur réseau, non représenté, attribuant à chaque slave sa destination par des moyens appropriés. Un adaptateur 26 réseau permet la configuration des paquets résultants selon les protocoles réseau.

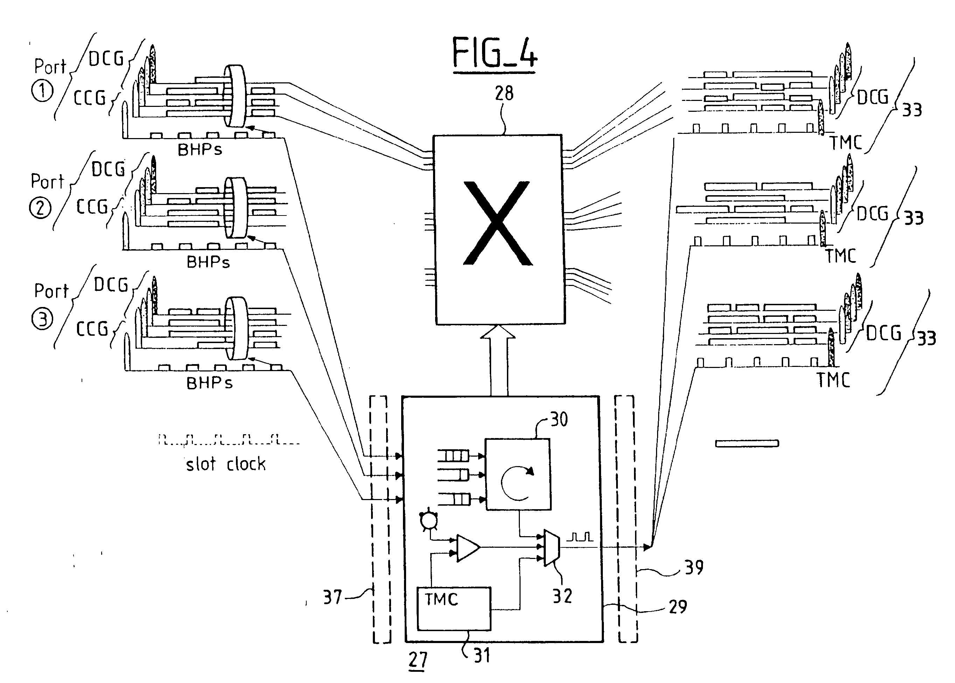

La figure 4 représente un mode de réalisation d'un système 27 de commutation selon l'invention. Ce système 27 est intégré au satellite.

Des ports {port1,port2,port3} représentant, comme mentionné ci-dessus, l'ensemble des flux d'informations transmis par des noeuds "edge" respectifs 2, sont reçus à des entrées correspondantes du satellite. Chaque port comporte un Groupe de Canaux de Données DCG et un Groupe de Canaux de Contrôle CCG.

Les canaux de données utiles de chaque port sont reçus par des entrées respectives d'un commutateur 28, alors que les canaux de données de contrôle (incluant les BHP) des mêmes ports sont dirigés vers des entrées correspondantes d'un contrôleur 29.

Après démodulation et décodage, les BHP vont alors être analysés par un bloc 30 d'ordonnancement destiné à affecter les salves de données utiles pointées par les BHP à des ports de sortie du satellite, cette affectation étant réalisée en fonction de paramètres indiqués dans les BHP, tels que la durée et la destination des salves de données utiles, leur QoS, leur priorité, etc.

Ce bloc 30 commande alors la commutation des salves de données utiles transitant de façon "transparente" (à savoir sans subir d'opérations de démodulation/décodage) dans le commutateur 28, de manière à se retrouver respectivement sur les ports de sortie adaptés.

Un générateur 31 d'horloge génère l'information de centrage TMC qui est multiplexée par le multiplexeur d'information 32 avec les autres informations issues du bloc 30. Ainsi, les plans de commutation du commutateur 28 et les ports descendants 33 sont cadencés à un rythme d'horloge commun.

Le contrôleur, et plus particulièrement le bloc 30, fonctionne de la manière suivante, pour chaque groupe de données utiles pointé par le BHP :
- si un canal de sortie est disponible dans le port de sortie ciblé par le BHP, le bloc 30 configure le fonctionnement du commutateur, de manière à commuter le groupe de données en question vers la sortie indiquée,
- si un tel canal n'est pas immédiatement disponible sur le port de sortie, le contrôleur peut retarder le groupe de données avec les moyens à bord adaptés pour le retard jusqu'à ce qu'un canal de données devienne disponible.

Ainsi, la gestion des situations de conflits sur les ports de sorties est réalisée par le bloc 30. Les méthodes de résolutions de ces conflits sont donc les suivantes:
- réallocation temporelle des paquets de données utiles : certains paquets de données utiles en conflit avec d'autres sont retardées, comme mentionné ci-dessus et détaillé ci-dessous, par le biais de moyens réalisant un retard (par exemple mémoire tampon, ligne à retard).
- réallocation fréquentielle des paquets de données utiles : chaque port étant constitué d'un groupe de canaux de fréquence, lorsque des paquets de données utiles se présentent sur un même port de sortie et sur un même canal fréquentiel de données, le commutateur 28, sur commande du bloc 30, réalise une translation de fréquence afin de présenter au même instant les paquets de données utiles auparavant en conflit sur des canaux de données différents d'un même port de sortie.
- réallocation de port : dans la mesure où la qualité de service associée aux paquets de données le permet, le bloc 30 d'aiguillage peut choisir de modifier le port de sortie de paquets de données en conflit, ceci afin de réduire la charge instantanée du port de sortie congestionné. Le choix du port de sortie dit de redirection se fait sur les critères suivants:
   a) disponibilité du port de redirection,
   b) les stations 7 couvertes par le faisceau associé au port de redirection sont capables de détecter ces paquets de données utiles redirigées, et de les retransmettre au satellite sur des canaux de données avec des informations de priorité dans les requêtes d'aiguillage associé empêchant le bouclage infini.

La figure 5 représente de façon détaillée le commutateur 28 et ses interconnexions avec le contrôleur 29. Le flux d'informations en provenance des n stations émettrices représentant les différents ports {port1 ;port2 ;.. ;portn} est schématisé au moyen d'une flèche 35. Ce flux multiplex est alors démultiplexé puis converti en fréquences plus basses compatibles avec les équipements ultérieurs dans la chaîne de traitement. N groupes de canaux présentant chacun p+1 canaux (chaque groupe de canaux ne comporte pas nécessairement le même nombre de canaux) se présentent respectivement alors face à des blocs 36 de commutation de canaux. En fait, chaque bloc 36 est composé de p+1 sous-matrices de commutation, chacune dédiée à un canal d'entrée et un canal de sortie du bloc 36 correspondant. Chaque bloc de commutation de canaux comporte p entrées pour la réception du groupe de canaux associé et p sorties. Le canal de contrôle CC du groupe, est isolé et dirigé vers une entrée d'un bloc 37 dit MCDDD (pour "MultiCarrier Demultiplexer Demodulator Décoder" en anglais). Ce bloc 37 recevant les n canaux de contrôle des n groupes de canaux a pour fonction le démultiplexage, la démodulation (par un bloc 371 de démodulation) et le décodage (par un bloc 372 de décodage) de ces canaux. Ce bloc a pour rôle également d'établir une estimation pour le centrage des intervalles d'informations de contrôle par rapport à l'horloge maître du contrôleur. Une fois les informations de contrôle récupérées en données brutes, celles-ci sont analysées par le contrôleur 29 et plus particulièrement le scheduler 30, tel qu'expliqué pour la figure 4. L'analyse des différentes requêtes d'aiguillage des informations de contrôle donne lieu à des instructions de commande du contrôleur, d'une part Scom1 vers les p sous-matrices des n blocs 36 de commutation de canaux et d'autre part Scom2 vers p sous-matrice de commutation de ports d'une matrice 38 de commutation de ports n*n. La matrice oriente les différents canaux de données utiles vers les ports ou spots adaptés en fonction de leur destination et de la disponibilité des ports.

Le contrôleur fournit également les signaux de centrage (TMC) dans un bloc 39 pour la modulation/codage. Les n sorties de ce bloc 39 fournissent les informations de centrage pour les n canaux TMC compris dans les n groupes de canaux en sortie de la matrice 38. Bien entendu, ces informations de centrage sont fournies sous forme de paquets TMP ("TeleMetry Paquet") cadencés au rythme de l'horloge maître 31. Les n groupes en sortie de la matrice 38 subissent alors une première opération de multiplexage et de conversion en fréquences plus hautes respectivement par un bloc 40 de multiplexage/conversion. Les signaux sortant de chacun des n blocs 40 sont alors multiplexés puis convertis en fréquences plus hautes adaptées pour la transmission radio par un bloc 41.

Les retards mentionnés ci-dessus pour permettre l'analyse des requêtes d'aiguillage peuvent être agencés soit au niveau de chaque sous-matrice des blocs 36 de commutation canaux, soit au niveau des sous-matrices de la matrice 38 de commutation de ports.

On soulignera que le contrôleur peut comporter également des moyens de destruction de tout paquet de données utiles non "aiguillables" en entrée du commutateur, ces moyens de destruction étant commandés et activés par le contrôleur.

Un mode de réalisation du protocole d'encapsulation des salves est décrit dans la suite :

Les données qui arrivent de l'extérieur du système satellitaire sont transportées dans des paquets dits réseau (typiquement des paquets IP). La taille de ces paquets est variable, et souvent non maîtrisée. Une première étape consiste donc à construire des salves de données à partir de l'agrégation de ces paquets réseau. Les critères d'agrégation sont -entre autres- une même destination, un même niveau de qualité de service, ... La taille de ces salves peut être fixe ou variable, le temps de constitution de la salve peut être aussi un critère de détermination. Par exemple, dans le cas d'une qualité de service du type Voix sur IP (couramment appelé VoIP), le retard autorisé sur les paquets réseau est très faible. Pour cette raison, lors de la constitution des salves de données, le temps d'arrivée des paquets réseau détermine l'instant de clôture de salves et donc leur taille. La taille minimale des salves est fixée par la capacité de transport des paquets de transport (décrits ci-après) et la taille maximale est souvent déterminée par la taille maximale d'un paquet réseau. Le schéma d'assemblage des paquets réseau en salves est décrit dans un préambule de salve, indiquant le nombre et la taille des paquets réseau assemblés dans la salve, ce préambule permettant ainsi la reconstitution des paquets réseau dans l'organe 25. Ces mécanismes opèrent au niveau de la couche 'salve' ("burst layer" en anglais).

Pour des raisons de synchronisation et de simplification du système satellitaire, une étape de segmentation des salves peut être introduite. Les salves sont découpées en paquets de taille fixe (les segments). Un préambule de segment est accolé à celui-ci, contenant entre autre un indicateur identifiant la salve dans le système à laquelle est rattaché ale segment, ainsi que le rang du segment dans la salve. L'ensemble segment et préambule de segment subit alors un traitement de protection contre les erreurs de transmission (codage). Une fois codé, cet ensemble segment et préambule, est éventuellement complété par des informations du type 'mot unique' parfois requis par les algorithmes de démodulation implémentés dans bloc récepteur satellite 23. Du point de vue de la couche physique, les paquets de données utiles qui seront commutés par le commutateur 28 correspondent à ces paquets codés de taille fixe, accompagnés de leur mot unique.

Dans la présente invention, les informations de contrôle (requêtes d'aiguillage) ont été décrites comme étant comprises dans un canal fréquentiel différent de celui ou de ceux contenant les informations utiles associées. Dans un mode de réalisation préférentiel, la transmission de ce canal fréquentiel d'informations de contrôle se fait en avance temporelle par rapport aux informations utiles, permettant ainsi d'économiser de l'espace mémoire à bord du satellite. Il est évident que l'essence de l'invention consiste en la possibilité de dissocier ces informations de contrôle des informations utiles pour leur faire subir un traitement différent. En conséquence, l'invention couvre également le cas, non décrit, d'informations de contrôle et utiles transmises selon un mode du type TDMA, voire CDMA, les informations de contrôle étant transmises en avance temporelle des informations utiles associées, sur un même canal fréquentiel ou différent.

## Revendications

1. Système de commutation d'informations pour un satellite (3) dans un système (2,3,7) de transmission déformations par satellite apte à relayer lesdites informations d'une première zone émettrice terrestre vers une seconde zone réceptrice terrestre via ledit satellite, lesdites informations se composant d'informations utiles (DCG) et respectivement requêtes d'aiguillage (CCG), dites informations de contrôle, associées destinées à informer sur l'aiguillage des informations utiles, ledit système comportant :
- des moyens (29,37,39) d'analyse d'informations à partir d'un signal portant les informations de contrôle, lesdits moyens d'analyse comprenant des moyens d'extraction (37) des informations de contrôle, lesdits moyens d'extraction (37) comprenant des moyens de démodulation (371) et de décodage (372) des informations de contrôle,
- des moyens de commutation (28) desdites informations utiles en fonction du résultat de l'analyse des requêtes d'aiguillage associées vers au moins un port parmi plusieurs ports d'émission pour émettre vers la zone réceptrice, **caractérisé en ce que** les moyens d'analyse d'informations reçoivent uniquement les informations de contrôle de manière à n'opérer une opération de démodulation et de décodage que sur les informations de contrôle, les informations utiles ne subissant aucune opération de démodulation ou de décodage.

2. Système de commutation selon la revendication 1, **caractérisé en ce que** lesdits moyens d'analyse comprennent des moyens (30) de commande destinés à configurer les moyens de commutation (28) en fonction des informations d'aiguillage extraites.

3. Système de commutation selon la revendication 2, **caractérisé en ce que**, le signal portant lesdites informations étant un signal multiplexé en fréquence du type AMRF, des premiers canaux de fréquence étant alloués aux informations utiles alors que d'autres seconds canaux de fréquence sont alloués aux informations de contrôle, les moyens d'extraction comportent des moyens de démultiplexage fréquentiel suivis de moyens de filtrage aptes à fournir le contenu informationnel des seconds canaux de fréquence aux moyens de commande.

4. Système de commutation selon la revendication 2, **caractérisé en ce que**, le signal portant lesdites informations étant un signal multiplexé dans le temps du type AMRT, des premiers groupes de fenêtres temporelles sont réservées pour les informations utiles alors que d'autres seconds groupes de fenêtres temporelles sont dédiées pour les informations de contrôle, les moyens d'extraction comportent des moyens de démultiplexage temporel aptes à fournir le contenu informationnel des seconds groupes aux moyens de commande.

5. Système de commutation selon l'une des revendications précédentes, **caractérisé en ce qu'**il comprend des moyens de génération (31) et de transmission (39) d'une horloge de référence, ayant pour effet d'asservir la cadence d'émission des paquets d'informations de contrôle à bord du satellite et des paquets d'informations utiles et de contrôle au sol.

6. Système de commutation selon l'une des revendications précédentes, **caractérisé en ce qu'**il comprend des moyens (290) d'estimation pour estimer :
- la qualité de la synchronisation, nommée centrage des paquets d'informations de contrôle, l'information de centrage pouvant être ensuite transmise à une station terrestre pour centrer les paquets d'informations utiles et de contrôle à émettre par cette station,
- et/ou les caractéristiques de démodulation et de décodage des informations de contrôle à bord du satellite,
- et/ou les taux de charge des liens descendants,
- et/ou l'état des équipements à bord du satellite.

7. Système de commutation selon l'une des revendications précédentes, caractérisé en ce qui'il comprend des moyens de retard de tout paquet de données utile en transit dans la section de commutation du satellite, commandables et activables par les moyens d'analyse.

8. Dispositif de transmission d'informations pour une station terrestre d'un système de transmission d'informations par satellite apte à relayer lesdites informations de ladite station terrestre émettrice vers au moins une station terrestre réceptrice via ledit satellite, lesdites informations se composant d'informations utiles et respectivement de requêtes d'aiguillage, dites informations de contrôle, associées destinées à informer sur les informations utiles,
**caractérisé en ce que** ledit dispositif comporte des moyens d'adaptation pour le transport desdites informations à destination du satellite, les informations de contrôle étant adaptées de manière à pouvoir être démodulées et décodées séparément des paquets de données utiles à bord du satellite.

9. Dispositif de transmission selon la revendication 8, **caractérisé en ce qu'**il comporte des moyens de génération (14) de salves d'informations utiles, des moyens (15) de génération de requêtes d'aiguillage, dites informations de contrôle, pointant chacune sur des informations utiles associées, et des moyens (18) de multiplexage en fréquence et/ou en temps desdites informations de manière à allouer des premiers canaux (DC) aux informations utiles et des seconds canaux (CC) aux informations de contrôle.

10. Dispositif de transmission selon la revendication 8 ou 9, **caractérisé en ce que** les premiers, respectivement les seconds canaux de fréquence, sont assemblés au sein d'un même premier groupe (DCG), respectivement un même second groupe (CCG).

11. Procédé de transmission d'informations dans un système de transmission d'informations par satellite apte à relayer lesdites informations d'une première zone émettrice terrestre vers une seconde zone réceptrice terrestre via ledit satellite, lesdites informations se composant d'informations utiles et respectivement de requêtes d'aiguillage, dites informations de contrôle, associées destinées à informer sur l'aiguillage des informations utiles à procéder dans le satellite, ledit procédé comportant :
- une étape de transmission des informations utiles sur des premiers canaux,
- une étape de transmission des informations de contrôle sur des seconds canaux, de sorte que seules lesdites informations de contrôle puissent être démodulées et décodées à bord du satellite.

12. Procédé de transmission selon la revendication 11, **caractérisé en ce que** les informations de contrôle sont émises en avance temporelle par rapport aux informations utiles auxquelles elles sont respectivement associées, la valeur de l'avance temporelle étant minorée par la durée maximale du temps d'analyse et de calcul de la configuration d'aiguillage résultants des toutes les requêtes d'aiguillage à bord du satellite.

13. Procédé de transmission selon la revendication 11, **caractérisé en ce que** les informations utiles et de contrôle sont émises simultanément.

14. Procédé de transmission selon l'une des revendications 11 à 13, **caractérisé en ce que**, les informations utiles étant émis par paquets, les paquets d'informations utiles sont séparés par des temps de silence, dits temps de garde, caractéristiques de la capacité du satellite de passer d'une configuration d'aiguillage à une autre.

15. Procédé de transmission selon l'une des revendications 11 à 14, **caractérisé en ce que** les informations issues ou allant vers l'extérieur du système satellitaire subissent une conversion de leur format de transport afin d'assurer la compatibilité avec le format de transport des données propre au système satellitaire.

16. Procédé de transmission selon l'une des revendications 11 à 15, **caractérisé en ce que** les requêtes d'aiguillage générées assurent la propagation de la notion de qualité de service à travers le système satellitaire, lorsque ladite notion de qualité de service existe hors du système satellitaire.

17. Procédé de transmission selon l'une des revendications 11 à 16, **caractérisé en ce que** les requêtes d'aiguillage générées assurent l'aiguillage correct des informations utiles pour que, du point de vue extérieur au système satellitaire, les informations utiles aient été effectivement aiguillées vers les destinations décrites par l'information d'adresse comprise dans la requête d'aiguillage et associée aux données utiles avant de rentrer dans le système satellitaire, mettant ainsi en oeuvre un correspondance entre les ports de sortie du satellite et l'information d'adresse associée aux informations utiles avant de rentrer dans le système satellitaire.

18. Procédé de transmission selon l'une des revendications 11 à 17, **caractérisé en ce que** les cadences d'émission des informations utiles et de contrôles soient asservies sur la cadence de l'horloge de référence localisée à bord du satellite, cette horloge de référence étant véhiculée dans un canal de contrôle du lien descendant.

19. Procédé de transmission selon l'une des revendications 11 à 18, **caractérisé en ce qu'**il maîtrise les caractéristiques du flux d'informations utiles en termes de débit utile par une indication de gestion des ressources des liens montants et descendants véhiculée sur un canal de contrôle descendant.

20. Procédé de transmission selon l'une des revendications 11 à 19, **caractérisé en ce qu'**il maîtrise les caractéristiques les caractéristiques d'émission du signal modulé en termes de rythme de bit, de phase, de puissance par une indication de démodulation et de décodage véhiculée sur un canal de contrôle descendant.

21. Procédé de transmission selon l'une des revendications 11 à 20, **caractérisé en ce qu'**il maîtrise le centrage des paquets d'informations utiles par la séparation de chacun des paquets déformations utiles d'une période de garde commun à tout le système satellitaire, ces périodes de garde se présentant au satellite au même instant, afin d'opérer le changement de configuration de commutation sans interruption de service, cette synchronisation utilisant les informations de centrage issues d'un canal de contrôle du lien descendant.

22. Procédé de commutation d'informations pour un satellite dans un système de transmission d'informations par satellite apte à relayer lesdites informations d'une première zone émettrice terrestre vers une seconde zone réceptrice terrestre via ledit satellite, lesdites informations se composant informations utiles et respectivement de requêtes d'aiguillage, dites informations de contrôle, associées destinées à informer sur l'aiguillage à procéder sur les informations utiles, ledit procédé comportant :
- une étape d'analyse d'informations,
- une étape de commutation desdites informations utiles en fonction des requêtes d'aiguillages associées et analysées vers différents ports d'émission vers la zone réceptrice,
**caractérisé en ce que** l'étape d'analyse consiste à n'opérer une opération de démodulation et de décodage que sur les informations de contrôle, les informations utiles ne subissant aucune opération de démodulation ou de décodage.

23. Procédé de commutation selon la revendication 22, **caractérisé en ce que** la résolution des situations de conflits pouvant survenir sur un même port de sortie utilise une ré-allocation temporelle, une ré-allocation fréquentielle ou une ré-allocation de port.

24. Procédé de commutation selon la revendication 22 ou 23, **caractérisé en ce que**, dans le cas d'une réallocation, la requête d'aiguillage associée au paquet déformations utiles redirigées contient une recommandation de priorité haute.

## Claims

1. An information switching system for a satellite (3) in a satellite information transmission system (2, 3, 7) that is designed to relay said information from a first terrestrial emission zone to a second terrestrial reception zone via said satellite, said information comprising useful information (DCG) and respectively associated routing requests (CCG), referred to as control information, designed to provide information relating to the routing of the useful information, said system comprising:
- means (29, 37, 39) for analysing information on the basis of a signal carrying the control information, said analysis means comprising means (37) for extracting control information, said extraction means (37) comprising means for demodulating (371) and decoding (372) control information;
- means (28) for switching said useful information as a function of the result of the analysis of the associated routing requests to at least one port from a plurality of emission ports for emitting to the reception zone,
**characterised in that** the information analysis means only receive the control information so as to complete a demodulating and decoding operation on the control information only, the useful information not undergoing any demodulating or decoding operation.

2. The switching system according to claim 1, **characterised in that** said analysis means comprise control means (30) designed to configure the switching means (28) as a function of the extracted routing information.

3. The switching system according to claim 2, **characterised in that**, the signal carrying said information being a frequency multiplexed signal of the FDMA type, first frequency channels being assigned to useful information whereas other second frequency channels are assigned to control information, the extraction means comprise means for frequency demultiplexing followed by filtering means that are designed to provide the information content of the second frequency channels to the control means.

4. The switching system according to claim 2, **characterised in that**, the signal carrying said information being a time multiplexed signal of the TDMA type, first groups of time slots are reserved for the useful information whereas other second groups of time slots are dedicated to the control information, the extraction means comprise time demultiplexing means that are designed to provide the information content of the second groups to the control means.

5. The switching system according to any one of the preceding claims, **characterised in that** it comprises means for generating (31) and transmitting (39) a reference clock, the effect of which is to control the emission rate of packets of control information on board the satellite and packets of useful and control information on the ground.

6. The switching system according to any one of the preceding claims, **characterised in that** it comprises estimating means (290) for estimating:
- the quality of the synchronisation, designated centring of packets of control information, the centring information can then be transmitted to a terrestrial station for centring the packets of useful and control information to be emitted by this station;
- and/or the demodulating and decoding characteristics of the control information on board the satellite;
- and/or the load rates of the downlinks;
- and/or the status of the equipment on board the satellite.

7. The switching system according to any one of the preceding claims, **characterised in that** it comprises means for delaying any packets of useful data in transit in the switching section of the satellite, which can be controlled and activated by the analysis means.

8. A device for transmitting information for a terrestrial station of a satellite information transmission system via a satellite that is designed to relay said information from said emission terrestrial station to at least one terrestrial reception station via said satellite, said information comprising useful information and respectively associated routing requests, referred to as control information, designed to provide information relating to the useful information,
**characterised in that** said device comprises adaptation means for carrying said information that is destined for the satellite, the control information being designed so as to be able to be demodulated and decoded separately from the useful data packets on board the satellite.

9. The transmission device according to claim 8, **characterised in that** it comprises means (14) for generating bursts of useful information, means (15) for generating routing requests, referred to as control information, each pointing to associated useful information, and means (18) for frequency and/or time multiplexing said information so as to assign first channels (DC) to useful information and second channels (CC) to control information.

10. The transmission device according to claim 8 or 9, **characterised in that** the first and second frequency channels, respectively, are assembled within the same first group (DCG) and the same second group (CCG), respectively.

11. A method for transmitting information in a satellite information transmission system that is designed to relay said information from a first terrestrial emission zone to a second terrestrial reception zone via said satellite, said information comprising useful information and respectively associated routing requests, referred to as control information, designed to provide information relating to the routing of the useful information that is to occur in the satellite, said method comprising:
- a step of transmitting useful information on first channels;
- a step of transmitting control information on second channels, so that only said control information can be demodulated and decoded on board the satellite.

12. The transmission method according to claim 11, **characterised in that** the control information is emitted in advance relative to the useful information with which it is respectively associated, the advance time value being reduced by the maximum duration for analysing and calculating the resulting routing configuration for all of the routing requests on board of the satellite.

13. The transmission method according to claim 11, **characterised in that** the useful and control information is emitted simultaneously.

14. The transmission method according to any one of claims 11 to 13, **characterised in that**, the useful information being emitted in packets, the packets of useful information are separated by periods of silence, referred to as guard times, that are characteristic of the capacity of the satellite to switch from one routing configuration to another.

15. The transmission method according to any one of claims 11 to 14, **characterised in that** the carrying format of the information coming from or going to the outside of the satellite system is converted so as to ensure the compatibility with the specific data carrying format of the satellite system.

16. The transmission method according to any one of claims 11 to 15, **characterised in that** the routing requests generated ensure the propagation of the quality of service through the satellite system when said quality of service exists outside of the satellite system.

17. The transmission method according to any one of claims 11 to 16, **characterised in that** the routing requests generated ensure the correct routing of the useful information so that, when viewing from outside of the satellite system, the useful information has been effectively routed to the destinations described by the address information included in the routing request and associated with the useful data before entering the satellite system, thus establishing a correspondence between the output ports of the satellite and the address information associated with the useful information before entering the satellite system.

18. The transmission method according to any one of claims 11 to 17, **characterised in that** the emission rates of the useful and control information are controlled by the rate of the reference clock that is located on board the satellite, this reference clock being carried in a control channel of the downlink.

19. The transmission method according to any one of claims 11 to 18, **characterised in that** it controls the characteristics of the flow of useful information in terms of the useful throughput by an indication of the resources management of the uplinks and downlinks carried on a downlink control channel.

20. The transmission method according to any one of claims 11 to 19, **characterised in that** it controls the emission characteristics of the modulated signal in terms of the bit rate, the phase and the power by indicating the demodulation and decoding carried on a downlink control channel.

21. The transmission method according to any one of claims 11 to 20, **characterised in that** it controls the centring of the packets of useful information by separating each of the packets of useful information by a guard period that is common to the entire satellite system, these guard periods being presented to the satellite at the same time, so as to change the switching configuration without interrupting the service, this synchronisation using the centring information coming from a control channel of the downlink.

22. A method for switching information for a satellite in a satellite information transmission system that is designed to relay said information from a first terrestrial emission zone to a second terrestrial reception zone via said satellite, said information comprising useful information and respectively associated routing requests information, referred to as control information, designed to provide information relating to the routing to be carried out on the useful information, said method comprising:
- a step of analysing information;
- a step of switching said useful information as a function of the associated and analysed routing requests to various emission ports to the reception zone,
**characterised in that** the analysis step consists in performing a demodulating and decoding operation only on the control information, the useful information not undergoing any demodulating or decoding operation.

23. The switching method according to claim 22, **characterised in that** the resolution of conflict situations that can occur on the same output port use a time reallocation, a frequency reallocation or a port reallocation.

24. The switching method according to claim 22 or 23, **characterised in that**, in the case of a reallocation, the routing request that is associated with the packets of redirected useful information contains a high priority recommendation.

## Patentansprüche

1. Informationsschaltungssystem für einen Satelliten (3) in einem Satelliten-Informationsübertragungssystem (2, 3, 7), das die Informationen von einer ersten terrestrischen Sendezone über den Satelliten zu einer zweiten terrestrischen Empfangszone senden kann, wobei sich die Informationen aus Nutzinformationen (DCG) bzw. assoziierten Routing-Informationen (CCG), Steuerinformationen genannt, zum Informieren über die Verkehrslenkung von Nutzinformationen zusammensetzen, wobei das System Folgendes umfasst:
- Mittel (29, 37, 39) zum Analysieren von Informationen von einem die Steuerinformationen tragenden Signal, wobei die Analysemittel Mittel zum Extrahieren (37) von Steuerinformationen umfassen, wobei die Extraktionsmittel (37) Mittel zum Demodulieren (371) und zum Decodieren (372) der Steuerinformationen umfassen,
- Mittel (28) zum Schalten der Nutzinformationen in Abhängigkeit vom Ergebnis der Analyse der assoziierten Routing-Anforderungen zu wenigstens einem Port unter mehreren Sendeports zum Senden zu der Empfangszone,
**dadurch gekennzeichnet, dass** die Informationsanalysemittel nur die Steuerinformationen empfangen, so dass eine Demodulations- und Decodieroperation nur an den Steuerinformationen vorgenommen wird, wobei die Nutzinformationen keine Demodulations- oder Decodieroperation erfahren.

2. Schaltungssystem nach Anspruch 1, **dadurch gekennzeichnet, dass** die Analysemittel Befehlsmittel (30) zum Konfigurieren der Schaltmittel (28) in Abhängigkeit von den extrahierten Routing-Informationen umfassen.

3. Schaltungssystem nach Anspruch 2, **dadurch gekennzeichnet, dass** das die Informationen führende Signal ein frequenzmultipliziertes Signal des FDMA-Typs ist, wobei die ersten Frequenzkanäle den Nutzinformationen zugeordnet werden, während andere zweite Frequenzkanäle den Steuerinformationen zugeordnet werden, wobei andere Extraktionsmittel Mittel zum Frequenzdemultiplexieren gefolgt von Filtermitteln umfassen, die den Informationsinhalt der zweiten Frequenzkanäle den Befehlsmitteln zuführen können.

4. Schaltungssystem nach Anspruch 2, **dadurch gekennzeichnet, dass** das die Informationen tragende Signal ein zeitmultiplexiertes Signal des TDMA-Typs ist, wobei die ersten Zeitfenstergruppen für die Nutzinformationen reserviert sind, während andere zweite Zeitfenstergruppen für die Steuerinformationen dediziert sind, wobei die Extraktionsmittel Zeitdemultiplexiermittel umfassen, die den Informationsinhalt der zweiten Gruppen den Befehlsmitteln zuführen können.

5. Schaltungssystem nach einem der vorherigen Ansprüche, **dadurch gekennzeichnet, dass** es Erzeugungsmittel (31) und Übertragungsmittel (39) eines Referenzzeitgebers umfasst, um den Sendetakt von Steuerinformationspaketen an Bord des Satelliten und den von Nutzinformationspaketen und Steuerinformationspaketen am Boden zu regeln.

6. Schaltungssystem nach einem der vorherigen Ansprüche, **dadurch gekennzeichnet, dass** es Schätzmittel (290) umfasst, um Folgendes zu schätzen:
- die Qualität der Synchronisation, Zentrieren von Steuerinformationspaketen genannt, wobei die Zentrierungsinformation dann zu einer terrestrischen Station übertragen werden kann, um die von dieser Station zu sendenden Nutz- und Steuerinformationspakete zu zentrieren,
- und/oder die Demodulations- und Decodierungscharakteristiken von Steuerinformationen an Bord des Satelliten,
- und/oder die Belastungen von Downlinks,
- und/oder die Zustände von Geräten an Bord des Satelliten.

7. Schaltungssystem nach einem der vorherigen Ansprüche, **dadurch gekennzeichnet, dass** es Mittel zum Verzögern jedes Nutzdatenpakets im Transit im Schaltungsteil des Satelliten umfasst, die von den Analysemitteln gesteuert und aktiviert werden können.

8. Vorrichtung zum Übertragen von Informationen für eine terrestrische Station eines Satelliten-Informationsübertragungssystems, das die Informationen der terrestrischen Sendestation über den Satelliten zu wenigstens einer terrestrischen Empfangsstation weiterleiten kann, wobei sich die Informationen aus Nutzinformationen und jeweils assoziierten Routing-Informationen, Steuerinformationen genannt, zusammensetzen, die zum Informieren über die Nutzinformationen bestimmt sind,
**dadurch gekennzeichnet, dass** die Vorrichtung Adaptionsmittel für den Transport der Informationen zum Satelliten umfasst, wobei die Steuerinformationen so ausgelegt sind, dass sie separat von den Nutzdatenpaketen an Bord des Satelliten demoduliert und decodiert werden können.

9. Übertragungsvorrichtung nach Anspruch 8, **dadurch gekennzeichnet, dass** sie Mittel zum Erzeugen (14) von Nutzinformationsbündeln, Mittel (15) zum Erzeugen von Routing-Anforderungen, Steuerinformationen genannt, die jeweils auf die assoziierten Nutzinformationen zeigen, und Mittel (18) zum Frequenz- und/oder Zeitmultiplexieren der Informationen umfasst, um erste Kanäle (DC) den Nutzinformationen und zweite Kanäle (CC) den Steuerinformationen zuzuordnen.

10. Übertragungsvorrichtung nach Anspruch 8 oder 9, **dadurch gekennzeichnet, dass** die ersten bzw. die zweiten Frequenzkanäle innerhalb einer selben ersten Gruppe (DCG) bzw. einer selben zweiten Gruppe (CCG) vereinigt werden.

11. Verfahren zum Übertragen von Informationen in einem Satelliten-Informationsübertragungssystem, das die Informationen in einer ersten terrestrischen Sendezone über den Satelliten zu einer zweiten terrestrischen Empfangszone weiterleiten kann, wobei sich die Informationen aus Nutzinformationen und jeweils assoziierten Routing-Anforderungen, Steuerinformationen genannt, zusammensetzen, um über die in dem Satelliten durchzuführende Leitwegführung von Nutzinformationen zu informieren, wobei das Verfahren Folgendes beinhaltet:
- einen Schritt des Übertragens von Nutzinformationen auf ersten Kanälen,
- einen Schritt des Übertragens von Steuerinformationen auf zweiten Kanälen, so dass nur die Steuerinformationen an Bord des Satelliten demoduliert und decodiert werden können.

12. Übertragungsverfahren nach Anspruch 11, **dadurch gekennzeichnet, dass** die Steuerinformationen zeitlich vor den Nutzinformationen gesendet werden, mit denen sie jeweils assoziiert sind, wobei der Wert des zeitlichen Vorsprungs um die maximale Dauer der Analyse- und Berechnungszeit der Routing-Konfiguration reduziert wird, die aus allen Routing-Anforderungen an Bord des Satelliten resultiert.

13. Übertragungsverfahren nach Anspruch 11, **dadurch gekennzeichnet, dass** die Nutz- und Steuerinformationen gleichzeitig gesendet werden.

14. Übertragungsverfahren nach einem der Ansprüche 11 bis 13, **dadurch gekennzeichnet, dass**, da die Nutzinformationen paketweise gesendet werden, die Nutzinformationspakete in Ruhezeiten getrennt werden, Schutzzeiten genannt, die für die Kapazität des Satelliten, von einer Routing-Konfiguration zu einer anderen überzugehen, charakteristisch sind.

15. Übertragungsverfahren nach einem der Ansprüche 11 bis 14, **dadurch gekennzeichnet, dass** die Informationen, die das Satellitensystem verlassen oder auf ihrem Weg aus ihm sind, eine Umwandlung ihres Transportformats erfahren, um ihre Kompatibilität mit dem Transportformat der für das Satellitensystem spezifischen Daten zu gewährleisten.

16. Übertragungsverfahren nach einem der Ansprüche 11 bis 15, **dadurch gekennzeichnet, dass** die erzeugten Routing-Anforderungen die Ausbreitung der Quality of Service über das Satellitensystem gewährleisten, wenn die Quality of Service außerhalb des Satellitensystems existiert.

17. Übertragungsverfahren nach einem der Ansprüche 11 bis 16, **dadurch gekennzeichnet, dass** die erzeugten Routing-Anforderungen eine korrekte Verkehrslenkung der Nutzinformationen gewährleisten, damit mit Blick von außerhalb des Satellitensystems die Nutzinformationen effektiv zu den in den Adressinformationen beschriebenen Zielen geleitet werden, die in der Routing-Anforderung enthalten und mit den Nutzdaten assoziiert sind, bevor sie in das Satellitensystem eintreten, wodurch eine Korrespondenz zwischen den Ausgangsports des Satelliten und der mit den Nutzdaten assoziierten Adressinformation vor dem Eintreten in das Satellitensystem hergestellt wird.

18. Übertragungsverfahren nach einem der Ansprüche 11 bis 17, **dadurch gekennzeichnet, dass** die Senderate der Nutz- und Steuerinformationen auf den an Bord des Satelliten befindlichen Referenztaktgeber geregelt wird, wobei dieser Referenztaktgeber in einem Steuerkanal der Downlink geführt wird.

19. Übertragungsverfahren nach einem der Ansprüche 11 bis 18, **dadurch gekennzeichnet, dass** es die Charakteristiken des Nutzinformationsflusses im Sinne des nützlichen Durchsatzes durch eine Managementanzeige von Ressourcen auf der Uplink und der Downlink regelt, die auf einem Downlink-Steuerkanal geführt werden.

20. Übertragungsverfahren nach einem der Ansprüche 11 bis 19, **dadurch gekennzeichnet, dass** es die Charakteristiken des Sendens des modulierten Signals im Sinne des Bit-, Phasen-, Leistungsrhythmus durch Anzeigen von Demodulation und Decodierung verwaltet, die auf einem Downlink-Steuerkanal geführt werden.

21. Übertragungsverfahren nach einem der Ansprüche 11 bis 20, **dadurch gekennzeichnet, dass** es die Zentrierung von Nutzinformationspaketen durch Trennen der einzelnen Nutzinformationspakete durch eine dem gesamten Satellitensystem gemeinsame Schutzperiode verwaltet, wobei diese Schutzperioden im selben Augenblick im Satelliten auftreten, um eine Änderung der Schaltungskonfiguration ohne Diensteunterbrechung zu bewirken, wobei diese Synchronisierung die von einem Steuerkanal der Downlink ausgegebenen Zentrierungsinformationen nutzt.

22. Verfahren zum Schalten von Informationen für einen Satelliten in einem Satelliten-Informationsübertragungssystem, das die Informationen einer ersten terrestrischen Sendezone über den Satelliten zu einer zweiten terrestrischen Empfangszone weiterleiten kann, wobei sich die Informationen aus Nutzinformationen und jeweils assoziierten Routing-Anforderungen, Steuerinformationen genannt, zusammensetzt, die zum Informieren über die an den Nutzinformationen durchzuführende Verkehrslenkung bestimmt sind, wobei das Verfahren Folgendes beinhaltet:
- einen Informationsanalyseschritt,
- einen Schritt zum Schalten der Nutzinformationen in Abhängigkeit von den assoziierten und analysierten Routing-Anforderungen zu verschiedenen Sendeports zur Empfangszone,
**dadurch gekennzeichnet, dass** der Analyseschritt darin besteht, eine Demodulations- und Decodieroperation nur an den Steuerinformationen durchzuführen, wobei die Nutzinformationen keine Demodulations- oder Decodieroperation erfahren.

23. Schaltungsverfahren nach Anspruch 22, **dadurch gekennzeichnet, dass** die Auflösung von Konfliktsituationen, die am selben Ausgangsport auftreten können, eine zeitliche Neuzuordnung, eine Frequenzneuzuordnung oder eine Portneuzuordnung beinhaltet.

24. Schaltungsverfahren nach Anspruch 22 oder 23, **dadurch gekennzeichnet, dass** im Falle einer Neuzuordnung die mit dem Paket von umgeleiteten Nutzinformationen assoziierte Routing-Anforderung eine Hochprioritätsempfehlung enthält.
